# EUROPEAN PATENT SPECIFICATION

(11) **EP 3 106 034 B1**
(45) Date of publication and mention of the grant of the patent: **09.09.2020**
(21) Application number: 15460035.7
(22) Date of filing: 30.07.2015
(51) Int. Cl.: A01N 57/20, A01N 57/22, A01P 13/00

(54) **USE OF IONIC LIQUIDS BASED ON TERTIARY PHOSPHINE OXIDES WITH A METHYLIMIDAZOLIUM GROUP AS HERBICIDES**
VERWENDUNG VON IONISCHEN FLÜSSIGKEITEN BASIEREND AUF TERTIÄREN PHOSPHINOXIDEN MIT EINER METHYLIMIDAZOLIUM-ENDGRUPPE ALS HERBIZIDE
UTILISATION DE LIQUIDES IONIQUES BASÉS SUR DES OXYDES DE PHOSPHINE TERTIAIRE AVEC UN GROUPE MÉTHYLIMIDAZOLIUM COMME HERBICIDES

(30) Priority: 18.06.2015 PL 41277115
(43) Date of publication of application: 21.12.2016
(73) Proprietor: Uniwersytet Humanistyczno-Przyrodniczy im. Jana Dlugosza w Czestochowie, 42-200 Czestochowa (PL)
(72) Inventor: Biczak, Robert, 42-200 Czestochowa (PL); Ciesielski, Wojciech, 42-200 Czestochowa (PL); Drabowicz, Jozef, 93-419 Lodz (PL); Pawlowska, Barbara, 42-120 Miedzno (PL); Miroshnychenko, Stanislav, 02097 Kiev (UA); Kulawik, Damian, 42-200 Czestochowa (PL); Pokora-Sobczak, Patrycja, 92-305 Lodz (PL); Krasowska, Dorota, 92-517 Lodz (PL)
(74) Representative: Malewska, Ewa

(56) References cited:
- EP-A1- 2 823 709
- EP-A1- 2 893 807
- WO-A2-2012/006313
- DE-A1- 4 115 434
- US-A1- 2008 207 452
- JULIUSZ PERNAK ET AL: "Ionic liquids with herbicidal anions", TETRAHEDRON, ELSEVIER SCIENCE PUBLISHERS, AMSTERDAM, NL, vol. 67, no. 26, 5 May 2011 (2011-05-05), pages 4838-4844, XP028227648, ISSN: 0040-4020, DOI: 10.1016/J.TET.2011.05.016 [retrieved on 2011-05-12]
- Jorge Alvarez Vicente ET AL: "Phosphine oxide functionalised imidazolium ionic liquids as tuneable ligands for lanthanide complexation", Chem. Commun. Chem. Commun, 1 January 2012 (2012-01-01), pages 6115-6117, XP55225139, U.K. Retrieved from the Internet: URL:http://pubs.rsc.org/en/content/article pdf/2012/cc/c2cc31544k [retrieved on 2015-11-02]
- DATABASE WPI Week 201405 Thomson Scientific, London, GB; AN 2014-A58398 XP002750128, -& CN 103 374 032 A (UNIV NINGBO) 30 October 2013 (2013-10-30)
- DATABASE WPI Week 201412 Thomson Scientific, London, GB; AN 2014-A58394 XP002750129, -& CN 103 374 034 A (UNIV NINGBO) 30 October 2013 (2013-10-30)
- DATABASE WPI Week 201414 Thomson Scientific, London, GB; AN 2014-A58392 XP002750130, -& CN 103 374 035 A (UNIV NINGBO) 30 October 2013 (2013-10-30)
- MARIANNE MATZKE ET AL: "Ionic liquids in soils: effects of different anion species of imidazolium based ionic liquids on wheat (Triticum aestivum) as affected by different clay minerals and clay concentrations", ECOTOXICOLOGY, KLUWER ACADEMIC PUBLISHERS, BO, vol. 18, no. 2, 19 October 2008 (2008-10-19), pages 197-203, XP019674054, ISSN: 1573-3017
- MARIANNE MATZKE ET AL: "Imidazolium based ionic liquids in soils: effects of the side chain length on wheat (Triticum aestivum) and cress (Lepidium sativum) as affected by different clays and organic matter", GREEN CHEMISTRY, vol. 10, no. 5, 1 January 2008 (2008-01-01), page 584, XP055225416, GB ISSN: 1463-9262, DOI: 10.1039/b717811e
- MINAKSHMI PARAMANIK ET AL: "Catalytic nucleophilic fluorination by an imidazolium ionic liquid possessing trialkylphosphine oxide functionality", JOURNAL OF FLUORINE CHEMISTRY, vol. 178, 30 June 2015 (2015-06-30), pages 47-55, XP55225307, NL ISSN: 0022-1139, DOI: 10.1016/j.jfluchem.2015.06.022

## Description

The present invention relates to the use of ionic liquids based on tertiary phosphi ne oxide derivatives with alkylamino heteroaryl group, especially *N*-methylimidazole ring, selected from *N*-[4-(*tert*-butylphenylphosphinyl)]-n-butyl-*N*-methylimidazolium chloride, *N*-[4-(benzylphenylphosphinyl)]-n-butyl-*N*-methylimidazolium chloride, *N*-[4-(benzylphenylphosphinyl)]-n-butyl-*N*-methylimidazolium bis(trifluoromethylsulfonyl)imide and *N*-[4-*tert*-butylphenylphosphinyl]-n-butyl-*N*-methylimidazolium bis(trifluoromethylsulfonyl) imide as herbicides. A process for the preparation of chiral and achiral, racemic or enantiomerically enriched or enantiomerically pure ionic liquids derivatives of achiral or chiral tertiary phosphine oxides containing an alkyl substituent having number of carbon atoms of 4 or more with terminal *N*-methylimidazole ring containing achiral or stereogenic phosphorus atom is known from patent application filed in the Polish Patent Office with the number PL411260¹

In recent years, in the chemical literature can be observed fast increase in the number of examples which show very interesting properties and various application possibilities of imidazolium ionic liquids. It is known that imidazolium ionic liquids have a variety of biological properties and can be used as bactericides, fungicides or algicides, and the activity of these compounds depends mainly on the length of the alkyl substituent and the type of the anion [Biczak R., Pawtowska B., Batczewski P., Rychter P., J. Hazard. Mater., 2014, 274, 181-190; Bubalo M.C., Radošević K., Redovniković I.R., Halambek J., Srček V.G. 2014, Ecotoxicol. Environ. Saf., 2014, 99, 1 -12; Docherty K.M., Kulpa Ch.F., Green Chem., 2005, 7, 185-189; Pernak J., Goc I., Mirska I., Green Chem., 2005, 6, 323-329; Petkovic M., Ferguson J., Bohn A., Trindale J., Martins I., Carvalho M.B., Leitão M.C., Rodrigues C., Garcia H., Fereira R., Seddon K.R., Rebelo L.P.N., Silva Pereira C., Green Chem., 2009, 11, 889-894; Cho Ch-W., Pham T.P.T., Jeon Y-Ch., Vijayaraghavan K., Choe W-S., Yun Y-S., Chemosphere, 2007, 69, 1003-1007; Borowiecki P., Milner-Krawczyk M., Plenkiewicz J., Beilstein J. Org. Chem., 2013, 9, 516-525; Cho Ch-W., Pham T.P.T., Jeon Y-Ch., Yun Y-S., Green Chem., 2008, 10, 67-72].

Alvarez Vincente et al. disclose the use of phosphine oxide functionalised imidazolium-based ionic liquids as complexing agent for lanthanides (Chem. Commun. 2012, 6115-6117).

CN 103 374 035 A discloses the use of phosphine oxide functionalised imidazolium-based ionic liquids as solvents.

Pernak et al. disclose ionic liquids with herbicidal anions (Tetrahedron 2011, 67, 4838-4844).

It has been found that *N*-[4-(*tert*-butylphenylphasphinyl)]-n-butyl-*N-*methylimidazolium chloride, *N*-[4-(benzylphenylphosphinyl)]-n-butyl-*N-*methylimidazolium chloride, *N*-[4-(benzylphenylphosphinyl)]-n-butyl-*N-*methylimidazolium bis(trifluoromethylsulfonyl)imide and *N*-[4-*tert*-butylphenylphosphinyl]-n-butyl-*N*-methylimidazolium bis(trifluoromethylsulfonyl) imide have so far unexplored herbicidal properties.

The ionic liquids used in the invention so far have not found any commercial use.

According to the invention *N-*[4-(*tert*-butylphenylphosphinyl)]-n-butyl-*N*-methylimidazolium chloride (Formula **1**), *N*-[4-(benzylphenylphosphinyl)]-n-butyl-*N*-methylimidazolium chloride (Formula **2**), *N*-[4-(benzylphenylphosphinyl)]-n-butyl-*N*-methylimidazolium bis(trifluoromethylsulfonyl)imide (Formula **3**) and *N*-[4-*tert*-butylphenylphosphinyl]-n-butyl-*N*-methylimidazolium bis(trifluoromethylsulfonyl) imide (Formula **4**) are used as herbicides.

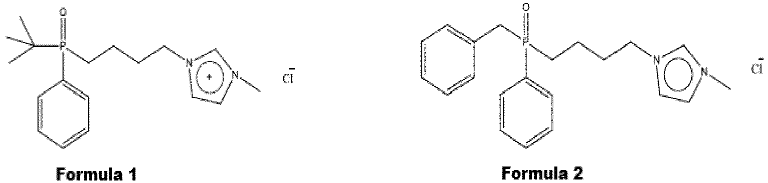

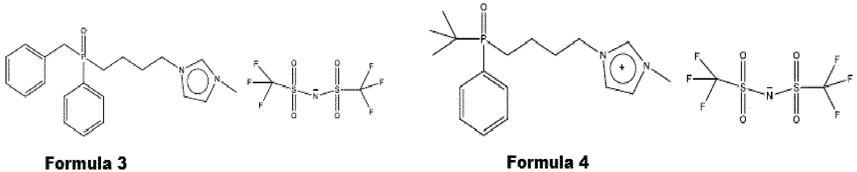

Said salts were used, according to the invention, against popular weeds, such as gallant-soldier (*Galinsoga parviflora* Cav.), white goosefoot, fat hen (*Chenopodium album* L.) and sorrel (*Rumex acetosa* L.). Plants were grown from seeds that were planted in plastic flowerpots with a diameter of 90 mm, containing 250 g of soil - light loamy sand. Three weeks after the emergence, weeds were sprayed with solutions of ionic liquids, tertiary phosphine oxide derivatives with a terminal amino group. By using the present invention technology effects were obtained and a methodology of preparation of spray liquids containing different concentrations of biologically active substances was developed, allowing for selective or total eradication of unwanted plants and the economic effects associated with the relatively low cost of production of ionic liquids, tertiary phosphine oxide derivatives with a terminal amino group, which makes obtained preparations competitive with those existing in the market of herbicidal compositions.

The following are exemplary applications of the invention, ionic liquids, tertiary phosphine oxides derivatives with a terminal amino group and their identified selective herbicidal properties. The following examples also show a method of preparing salts for use and their effect.

### Example I.

### Spray liquids at a concentration of 0.5%; 1.0% and 2.0% comprising as active ingredient N-[4-(tert-butylphenylphosphinyl)]-n-butyl-N-methylimidazolium chloride (Formula 1)

Spray liquids at concentrations of 0.5%, 1.0% and 2.0% were obtained by dissolving respectively 50 mg, 100 mg and 200 mg of *N*-[4-(*tert*-butylphenylphosphinyl)]-n-butyl-*N*-methylimidazolium chloride in 4 cm³ of methanol and the whole mixture was refilled to 10 cm³ with distilled water. Thus obtained suspensions were sprayed on weeds (white goosefoot, sorrel and gallant-soldier) in an amount of 2.5 cm³ of suspension for each flowerpot. *N*-[4-(*tert*-butylphenylphosphinyl)]-n-butyl-*N*-methylimidazolium chloride generally has a slight, selective herbicidal properties. The strongest herbicidal properties of this substance noted in relation to the sorrel, on the leaves of which chlorotic changes were observed after using lower concentrations, and in the case of spraying weeds with a spray liquid at the highest concentration (2.0%), after about 6 days more than half of the plants withered. In the case of white goosefoot, at the lowest concentration (0.5%) any effect of this compound is not observed. At a concentration of 1.0% growth of white goosefoot plants is temporarily blocked, but after about 8-10 days, the plants begin further vegetation. While in the case of the highest concentration (2.0%) after about 4-6 days after spraying some of the white goosefoot plants turn yellow and wither in the next few days. As a result of sprayi ng gallant-soldier plants with the test compound, minor changes on the leaves of this plant were observed, which appear after 1 -2 days after spraying for concentrations of 1.0% and 2.0%, and after approx. 4 days in the case of the spray liquid concentration equal to 0.5%. Within passing days, chlorotic and necrotic changes on the plants are getting bigger. The biggest visual changes of all the weeds were observed after application of spray liquid at the highest concentration, equal to 2.0%, but even at that concentration of *N*-[4-(*tert*-butylphenylphosphinyl)]-n-butyl-*N-*methylimidazolium chloride after 14 days after spraying only single dried plants of all three weeds or dead parts of the leaves of the test plants were observed (Formula **1**).

### Example II.

### Spray liquids at a concentration of 0.5%; 1.0% and 2.0% comprising as active ingredient N-[4-(benzylphenylphosphinyl)]-n-butyl-N-methylimidazolium chloride (Formula 2)

Spray liquids at concentrations of 0.5%, 1.0% and 2.0% were obtained by dissolving respectively 50 mg, 100 mg and 200 mg of *N*-[4-(benzylphenylphosphinyl)]-n-butyl-*N-*methylimidazolium chloride in 4 cm³ of methanol and the whole mixture was refilled to 10 cm³ with distilled water. Thus obtained suspensions were sprayed on weeds (white goosefoot, sorrel and gallant-soldier) in an amount of 2.5 cm³ of suspension for each flowerpot. *N*-[4-(benzylphenylphosphinyl)]-n-butyl-*N*-methylimidazolium chloride generally has a slight, selective herbicidal properties. At the highest concentration of the compound (2.0%), on the first day after spraying changes on the sorrel leaves were observed, in the next few days chlorotic and necrotic spots appear on them, and then fragments of leaves, especially the ends and edges completely dried up. When using spray liquid at lower concentrations of the compound, much weaker herbicidal properties of this salt are observed on the sorrel plants. After using a concentration of 1.0% only the edges of leaves dried up, and when using a concentration of 0.5%, practically we do not observe any toxic effects on the sorrel plants. In the case of white goosefoot, at the highest concentration of the compound after about 4 days after spraying chlorotic spots appear on the leaves, and in the next few days single leaves of the plant withered. However, there were observed no herbicidal activity in relation to white goosefoot after applying lower concentrations of spray liquid (0.5% and 1.0%). After spraying gallant-soldier plants with *N*-[4-(benzylphenylphosphinyl)]-n-butyl-*N*-methylimidazolium chloride the appearance of brown spots on the leaves was observed, and only by using the highest concentration equal to 2.0% of this compound drying of single leaves of this weed was found. Has been found that *N*-[4-(benzylphenylphosphinyl)]-n-butyl-*N-*methylimidazolium chloride used as a spray liquid at a concentration of 2.0% exhibited the highest herbicidal properties in relation to the test plants (Formula **2**)

### Example III.

### Spray liquids at a concentration of 0.5%; 1.0% and 2.0% comprising as active ingredient N-[4-(benzylphenylphasphinyl)]-n-butyl-N-methylimidazoliumbis(trifluoromethylsulfonyl) imide (Formula 3)

Spray liquids at concentrations of 0.5%, 1.0% and 2.0% were obtained by dissolving respectively 50 mg, 100 mg and 200 mg of *N*-[4-(benzylphenyl phosphinyl)]-n-butyl-*N-*methylimidazolium bis(trifluoromethylsulfonyl)imide in 4 cm³ of methanol and the whole mixture was refilled to 10 cm³ with distilled water. Thus obtained suspensions were sprayed on weeds (white goosefoot, sorrel and gallant-soldier) in an amount of 2.5 cm³ of suspension for each flowerpot.

*N*-[4-(benzylphenylphasphinyl)]-n-butyl-*N*-methylimidazolium bis(trifluoromethylsulfonyl) imide exhibits evident selective herbicidal properties. The strongest effect of this salt was observed in the case of white goosefoot plants. Even in the case of using the lowest concentration of the spray liquid, after 4-6 days after spraying changes on white goosefoot leaves are observed, and after about 8-10 days more than half of the sprayed plants withered. When using the concentrations of 1.0% and 2.0% after about 2 days after spraying changes in the appearance of plants are observed, and after about 6 days after the spraying all the plants withered. In the case of sorrel, using concentrations of 0.5% and 1.0% on the leaves white borders appear, and after applying the highest concentration (2.0%) chlorotic changes are increasing, which then leads to drying up of the whole leaves. The use of spray liquid at all concentrations does not allow for control of weeds of morphological and anatomical structure similar to gallant-soldier, only after applying spray liquid at a concentration of 2.0%, slight chlorotic changes on the leaves of this plant were observed. (Formula **3**)

### Example IV.

### Spray liquids at a concentration of 0.5%; 1.0% and 2.0% comprising as active ingredient N-[4-tert-butylphenylphosphinyl]-n-butyl-N-methylimidazolium bis(trifluoromethylsulfonyl) imide (Formula 4)

Spray liquids at concentrations of 0.5%, 1.0% and 2.0% were obtained by dissolving respectively 50 mg, 100 mg and 200 mg of *N*-[4-*tert*-butylphenylphosphinyl]-n-butyl-*N-*methylimidazolium bis(trifluoromethylsulfonyl) imide in 4 cm³ of methanol and the whole mixture was refilled to 10 cm³ with distilled water. Thus obtained suspensions were sprayed on weeds (white goosefoot, sorrel and gallant-soldier) in an amount of 2.5 cm³ of suspension for each flowerpot.

*N*-[4-*tert*-butylphenylphosphinyl]-n-butyl-*N*-methylimidazolium bis(trifluoromethylsulfonyl) imide has a rather strong herbicidal properties. The biggest impact of this compound exhibits in relation to weeds of morphological and anatomical structure similar to white goosefoot plants. Two days after spraying found a significant change in the appearance of plants. At a concentration of 0.5% after about 6-8 days, about ¾ of plants wither, and at a concentrations of 1.0% and 2.0% after 6 days after spraying all white goosefoot plants withered. In the case of sorrel at a concentration of 0.5% only white borders of leaves were observed, and after application of the spray liquids at concentrations of 1.0% and 2.0% on the leaves of sorrel strong chlorotic spots appear and these leaves wither in the next few days. After using a foliar spray of gallant-soldier by spray solution at a concentration of 2.0% wither ends of the leaves of this plant, and then these changes include about half the surface of the leaves. At a concentration of 1.0% only minor chlorotic changes on the gallant-soldier leaves were observed, and using the lowest concentration (0.5%) *N*-[4-*tert*-butylphenylphosphinyl]-n-butyl-*N*-methylimidazolium bis(trifluoromethylsulfonyl) imide any activity of this salt on the gallant-soldier plant was not observed. (Formula **4**)

### Literature

1. Drabowicz J., Miroshnichenko S., Krasowska D., Ciesielski W. P-411260 z dnia 03.04.2015
2. Biczak R., Pawtowska B., Batczewski P., Rychter P., J. Hazard. Mater., 2014, 274, 181-190.
3. Bubalo M.C., Radošević K., Redovniković I.R., Halambek J., Srček V.G. 2014, Ecotoxicol. Environ. Saf., 2014, 99, 1-12.
4. Docherty K.M., Kulpa Ch.F., Green Chem., 2005, 7, 185-189.
5. Pernak J., Goc I., Mirska I., Green Chem., 2005, 6, 323-329.
6. Petkovic M., Ferguson J., Bohn A., Trindale J., Martins I., Carvalho M.B., Leitão M.C., Rodrigues C., Garcia H., Fereira R., Seddon K.R., Rebelo L.P.N., Silva Pereira C., Green Chem., 2009, 11 , 889-894.
7. Cho Ch-W., Pham T.P.T., Jeon Y-Ch., Vijayaraghavan K., Choe W-S., Yun Y-S., Chemosphere, 2007, 69, 1003-1007
8. Borowiecki P., Milner-Krawczyk M., Plenkiewicz J., Beilstein J. Org. Chem., 2013, 9,516-525.
9. Cho Ch-W., Pham T.P.T., Jeon Y-Ch., Yun Y-S., Green Chem., 2008, 10, 67-72

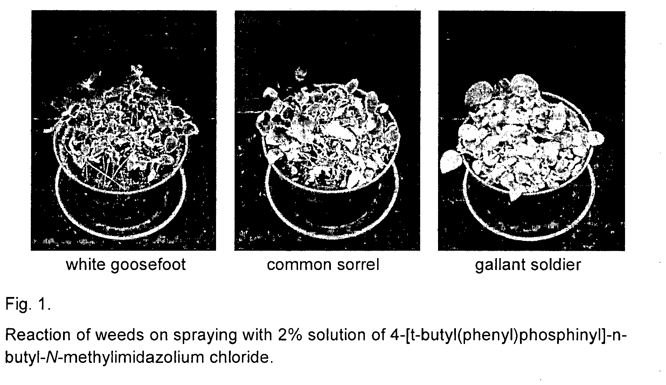

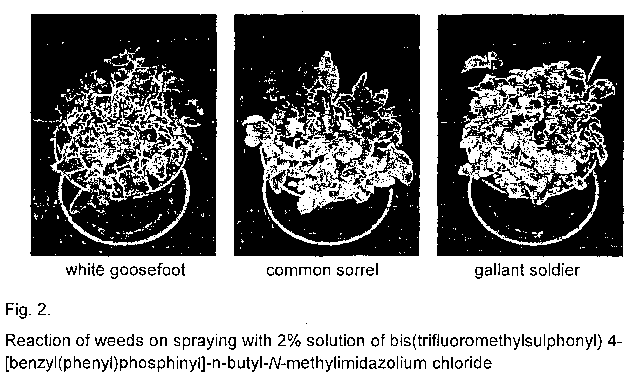

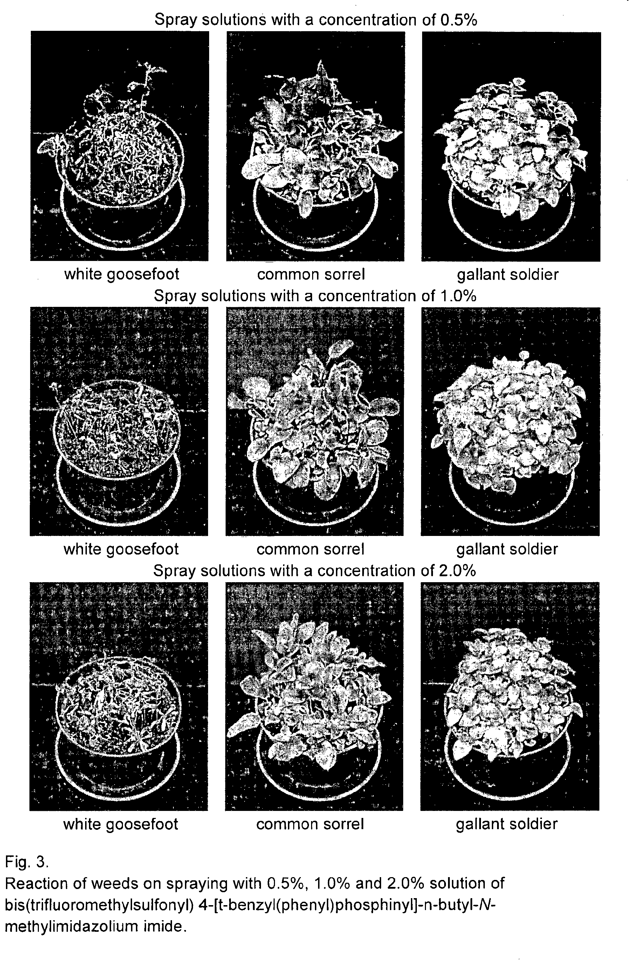

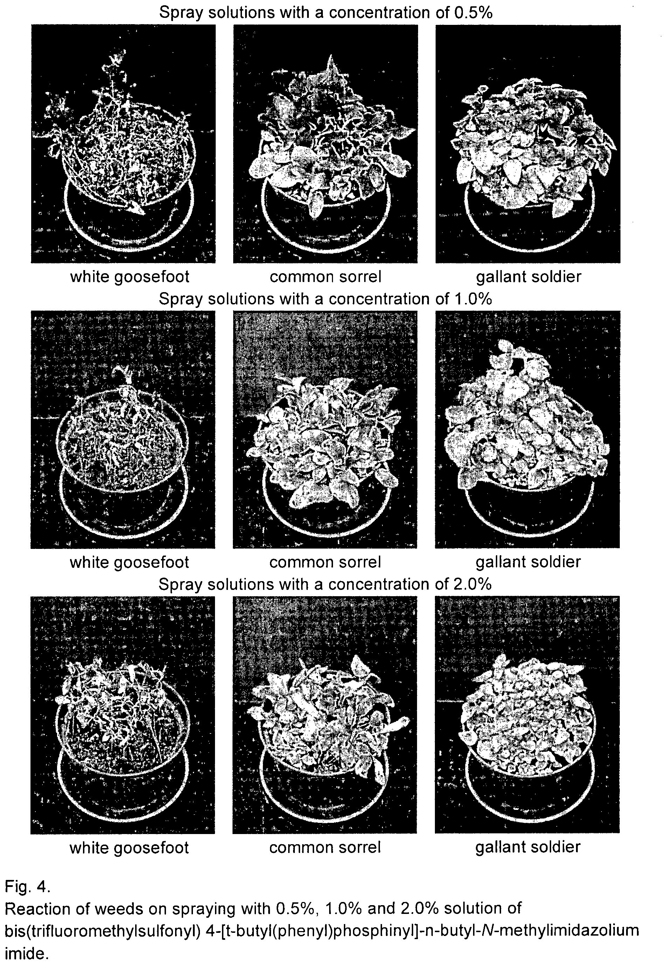

## Claims

1. The use of an ionic liquid based on tertiary phosphine oxides selected from *N*-[4-(*tert*-butylphenylphosphinyl)]-n-butyl-*N*-methylimidazolium chloride, *N*-[4-(benzylphenylphosphinyl)]-n-butyl-*N*-methylimidazolium chloride, *N*-[4-(benzylphenylphosphinyl)]-n-butyl-*N*-methylimidazolium bis(trifluoromethylsulfonyl)imide and *N*-[4-*tert*-butylphenylphosphinyl]-n-butyl-*N-*methylimidazolium bis(trifluoromethylsulfonyl) imide as a herbicide.

2. The use according to claim 1, wherein the tertiary phosphine oxide ionic liquids are used as spray liquids at concentrations of 1.0% and 2.0% of biologically active substances, preferably obtained by dissolving the ionic liquid in a small amount of methanol, followed by addition of water, and spraying the weeds to combat selectively, or totally undesirable plants.

## Patentansprüche

1. Verwendung als Herbizid einer ionischen Flüssigkeit auf Basis der tertiären Phosphinoxide, ausgewählt aus (folgenden) Zusammensetzungen: *N*-[4-(*tert-B*utylphenylphosphinyl)]-n-Butyl-*N*-Methylimidazoliumchlorid, *N*-[4-(benzylphenyl-phosphinyl)]-n-Butyl-*N*-Methylimidazolium-chlorid, *N*-[4-(benzylphenylphosphinyl]-n-Butyl-*N*-Methylimidazolium-bis(Trifluoromethylsul-fonyl)imid und *N*-[4-(*tert*-butyl-phenylphosphinyl)]-n-Butyl-*N*-Methylimidazolium-bis(Tri-fluoromethylsulfonyl)imid.

2. Verwendung nach Anspruch 1, **dadurch gekennzeichnet, dass** die ionischen Flüssigkeiten auf Basis der tertiären Phosphinoxide als Spritzflüssigkeit verwendet werden, und zwar in Konzentration von 1,0 % und 2,0% der biologisch aktiven Substanzen, erhalten vorzugsweise durch Auflösen der ionischen Flüssigkeit in einer kleinen Menge von Methanol, gefolgt von der Zugabe von Wasser, um Unkraut zur selektiven oder vollständigen Bekämpfung von unerwünschten Pflanzen zu spritzen.

## Revendications

1. L'utilisation d'un liquide ionique, basé sur les oxydes des phosphines tertiaires choisies parmi (les suivants :) chlorure de *N*-[4-(*tert*-butylphenylphosphinyl)]-n-butyl-*N-*méthylimidazolium, chlorure de *N*-[4-(benzylphenylphosphinyl)]-n-butyl-*N-*méthylimidazolium, bis(trifluorométhylsulfonyl)-imide de *N*-[4-benzylphenylphos-phinyl]-n-butyl-*N*-méthylimidazolium et bis(trifluorométhylsulfonyl)-imide de *N*-[4-*tert*-butylphenylphosphinyl]-n-butyl-*N*-méthylimidazolium, en tant qu'herbicide.

2. L'utilisation selon la revendication 1, **caractérisé en ce que** les liquides ioniques basé sur les oxydes des phosphines tertiaires sont utilisés en tant que liquides pour pulvérisations dans les concentrations 1,0% et 2,0% des substances actives biologiquement, obtenues favorablement par la dissolution d'un liquide ionique dans une petite quantité de méthanol puis par l'addition d'eau, et pulvérisation sur les mauvaises herbes, effectuée pour combattre sélectivement ou totalement les plantes indésirables.
